Europäisches Patentamt

(19) European Patent Office

Office européen des brevets

(11) Numéro de publication : **0 333 812 B1**

(12) **FASCICULE DE BREVET EUROPEEN**

(45) Date de publication du fascicule du brevet :
13.11.91 Bulletin 91/46

(51) Int. Cl.⁵ : **G01B 11/30, B31F 1/14**

(21) Numéro de dépôt : **88908239.2**

(22) Date de dépôt : **13.09.88**

(86) Numéro de dépôt international :
**PCT/FR88/00448**

(87) Numéro de publication internationale :
**WO 89/02573 23.03.89 Gazette 89/07**

(54) **DISPOSITIF POUR DETERMINER EN CONTINU UN INDICE D'ETAT DE SURFACE D'UNE FEUILLE CREPEE EN MOUVEMENT.**

(30) Priorité : **17.09.87 FR 8713100**

(43) Date de publication de la demande :
**27.09.89 Bulletin 89/39**

(45) Mention de la délivrance du brevet :
**13.11.91 Bulletin 91/46**

(84) Etats contractants désignés :
**AT BE CH DE FR GB IT LI NL SE**

(56) Documents cités :
**DE-A- 3 503 858
FR-A- 2 208 107
GB-A- 2 025 041
US-A- 4 019 066
Patent Abstracts of Japan, volume 7, no. 6
(P-167)(1151), 11 janvier1983, & JP, A,
57166505
Patent Abstracts of Japan, volume 6, no. 100
(P-121)(1978), 9 juin 1982, & JP, A, 5733306
Patent Abstracts of Japan volume 8, no. 278
(P-322)(1715), 19 décembre 1984, & JP, A,
59143907**

(73) Titulaire : **CENTRE TECHNIQUE DE L'INDUSTRIE DES PAPIERS, CARTONS ET CELLULOSES
Domaine Universitaire B.P. 7110
F-38020 Grenoble Cedex (FR)**

(72) Inventeur : **SABATER, Jacques
34, chemin des Graviers
F-91190 Gif-sur-Yvette (FR)**
Inventeur : **KERNEIS, Jean-Claude
Rue du Gymnase
F-38120 Saint-Egrève (FR)**
Inventeur : **BAUDUIN, Serge
25, chemin de Batonnière Corenc
F-38700 La Tronche (FR)**

(74) Mandataire : **Laurent, Michel et al
Cabinet LAURENT et CHARRAS, 20, rue Louis Chirpaz B.P. 32
F-69131 Ecully Cedex (FR)**

# Description

La présente invention se rapporte à un dispositif pour déterminer en continu un indice d'état de surface d'une feuille crêpée en mouvement, notamment d'une feuille de papier crêpée.

Par "indice d'état de surface", on désigne une valeur reflétant les variations, d'ondulation de la surface d'un matériau en feuille suivant l'une des dimensions, par rapport à la surface plane du même matériau.

L'industrie papetière fabrique de grandes quantités de papiers dit ouatés ou crêpés, c'est-à-dire de papiers présentant des ondulations difficilement visibles à l'oeil nu. Ce type de papier est notamment utilisé pour ses qualités d'absorption dues à l'augmentation de sa densité superficielle inhérente à la présence des ondulations. Il est généralement "marié", un nombre variable de fois, avec du papier du même type afin d'obtenir l'épaisseur voulue en fonction de l'usage qui lui est destiné (essuie-tout, serviette, etc.).

De manière connue, la fabrication du papier crêpé ou microcrêpé s'effectue en continu au moyen d'un cylindre en rotation (10 à 30 mètres par seconde à sa périphérie) de grande dimension (4 à 7 mètres de diamètre — largeur de plusieurs mètres) dénommé "yankee" dans la profession. On dépose le papier encore très humide (deux à trois fois plus d'eau que de fibres) sur le yankee en rotation, permettant ainsi de le sécher partiellement. Une racle, de dimension correspondant à la génératrice du yankee, est maintenue au contact de ce dernier. Le rôle de la racle consiste à provoquer le crêpage du papier, c'est-à-dire des ondulations sensiblement perpendiculaires au sens de déplacement de la feuille de papier, et de dimensions dépendant de l'utilisation voulue.

La racle est généralement constituée d'une lame en acier interchangeable. En effet, le yankee étant réalisé en fonte, et du fait de sa vitesse de rotation élevée d'une part, et de l'appui permanent de la racle sur ce dernier d'autre part, on observe une usure très rapide de la racle qui doit être changée fréquemment, faute de quoi son extrémité en contact avec le yankee prend une forme biseautée, provoquant un crêpage irrégulier, voire inexistant.

On ne connait pas actuellement de méthodes de contrôle de la qualité du crêpage autre que l'observation visuelle et donc subjective.

Un des critères de qualité de crêpage est la hauteur des ondulations, dont l'amplitude est directement liée à trois paramètres :

— l'usure de la racle, pour les raisons mentionnées précédemment ;

— la composition de la pâte à papier ;

— la qualité de la couche d'hémicellulose, appelée "peau", liée à la qualité de la pâte à papier, qui recouvre le yankee, et qui joue le rôle d'adhésif pour le papier pendant la phase de crêpage. En effet, en son absence, on observe, outre une usure accélérée de la racle, un crêpage irrégulier, voire la cassure du papier.

Dans les documents GB-A-2025041 et US-A-4019066, on a suggéré de mesurer l'état de rugosité d'une feuille de papier au moyen d'un dispositif comprenant une source lumineuse, un système optique, une cellule destinée à recevoir le rayon réfléchi et un système de traitement de ce faisceau réfléchi. Aucune de ces dispositions ne permet de mesurer l'état de surface, notamment les dimensions des ondulations d'une feuille de papier crêpée en mouvement.

Dans le document EP-A-0169790 du Demandeur, on a proposé de mesurer en continu l'état de formation d'une feuille de papier au moyen d'un dispositif comprenant une source laser, un moyen pour capter la lumière laser transmise à travers la feuille de papier et la transformer en signal électrique, et séparer ce signal en deux composants, ainsi qu'un moyen électronique pour calculer à partir de ces composants l'indice de l'état de formation de la feuille. Toutefois, ce dispositif est adapté à la mesure de l'état de formation de la feuille et non pas à la mesure des caractéristiques d'ondulation d'un papier crêpé.

L'un des buts de la présente invention, lorsqu'elle est appliquée à l'industrie papetière, est de garantir la qualité du papier crêpé et d'assurer une surveillance de l'usure de la racle.

Un autre but de la présente invention est de mesurer en continu l'amplitude des ondulations de tout type de matériau en feuille, ayant subi un crêpage ou un traitement analogue.

La présente invention propose un dispositif pour déterminer en continu un indice d'état de surface d'une feuille en mouvement, crêpée sous forme d'ondulations, du type comprenant :

● une source de lumière émettant un faisceau dirigé sur la surface de la feuille crêpée en mouvement ;

● un premier système optique, destiné à concentrer le faisceau émis sur la source et à former une tache lumineuse sur la surface de la feuille à analyser ;

● une cellule opto-électronique destinée à recevoir le faisceau rétrodiffusé par la feuille en mouvement, disposé du même côté de la feuille que le premier système optique, et dont la surface sensible reçoit au moins une partie de la lumière rétrodiffusée, concentrée par un second système optique convergent, ladite cellule opto-électronique délivrant au moins une information électrique en fonction de la position du point d'impact du faisceau rétrodiffusé délivré par le système optique convergent sur ladite surface sensible ;

● et un système de traitement du faisceau rétrodiffusé comprenant un moyen pour déterminer un indice d'état de surface de la feuille de papier à partir desdites informations électriques.

Selon l'invention, ce dispositif se caractérise en ce que le premier système optique est un système astigmate destiné, à donner, au niveau de la feuille, une forme elliptique à la tache lumineuse, le grand axe de cette ellipse étant disposé parallèlement aux ondulations de la feuille crêpée à analyser, et le petit axe de cette ellipse étant inférieur au pas moyen des ondulations.

En d'autres termes, l'invention consiste tout d'abord à élaborer un signal électrique par la méthode des proximètres optiques, puis, par des moyens appropriés, à élaborer des signaux électriques de sortie directement utilisables qui restituent les données géométriques de la feuille crêpée. Pour ce faire, selon l'invention, on forme une tache de dimensions déterminées sur la surface de la feuille crêpée. Lorsque cette feuille défile devant l'appareil, cette tache se déplace suivant le profil de la surface de la feuille. On détecte alors les mouvements de la tache dans la direction perpendiculaire au plan de la feuille en s'arrangeant pour être insensible aux modulations d'intensité lumineuse qui peuvent accompagner ces mouvements. On obtient de la sorte un signal électrique dont les variations, dans le temps, constituent une représentation analogique du profil de la surface de la feuille à analyser. Pour que cette représentation soit fidèle, il importe que la petite dimension de la tache soit inférieure au pas moyen des ondulations. Les variations du signal électrique contiennent toute l'information à partir de laquelle on détermine les paramètres de dimensions géométriques des ondulations du crêpage : amplitudes, longueurs d'ondes, formes d'ondes... Ces paramètres sont ensuite restitués sous forme de signaux électriques de sortie, disponibles en continu et en temps réel.

Avantageusement, en pratique :

— la source lumineuse est un laser Hélium-Néon ou un laser à semi-conducteur associé à un système optique de collimation ;

— le signal fonction des variations de position est filtré en passe-haut, afin d'éliminer les basses fréquences parasites ;

— le signal filtré en sortie du filtre passe-haut est traité par au moins un module permettant de déterminer au moins l'une des valeurs suivantes:

- crête à crête,
- valeur efficace dite RMS ;

— le dispositif comprend également un module-diviseur destiné à évaluer le facteur de forme du signal filtré à partir des indications données par le module RMS et le module crête à crête ;

— le dispositif comprend également un moyen pour évaluer le pas moyen de crêpage ;

— le dispositif comprend également un moyen pour positionner et maintenir la position moyenne du point d'impact de la tache lumineuse formée sur la cellule opto-électronique, et ce au centre de cette cellule, afin de réduire l'influence des variations de lumière rétrodiffusée, et par voie de conséquence, pour permettre une bonne reproductibilité des mesures ; pour ce faire, on utilise avantageusement un miroir asservi en position.

La manière dont l'invention peut être réalisée et les avantages qui en découlent ressortiront mieux des exemples de réalisation qui suivent à l'appui des figures annexées.

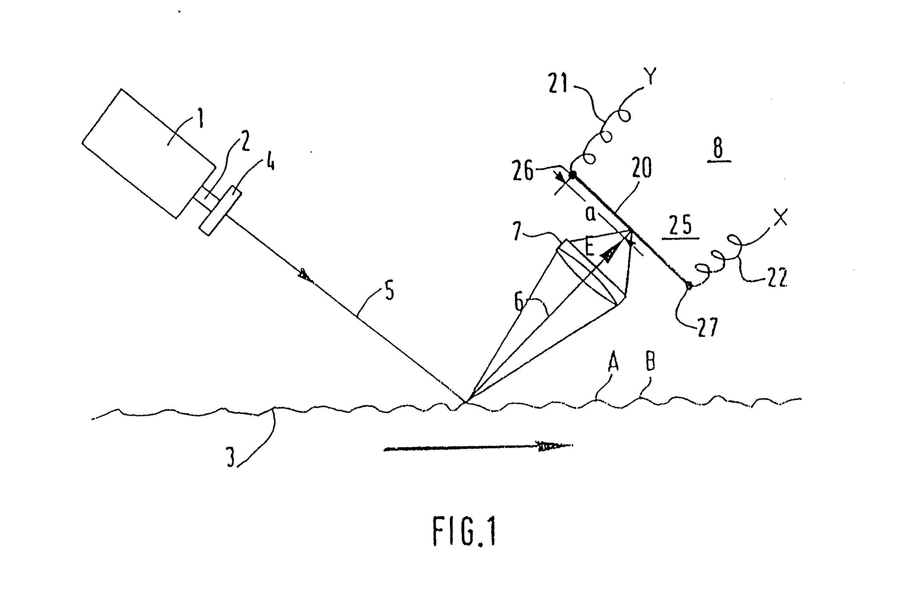

La figure 1 est une représentation du schéma optique du dispositif conforme à l'invention.

La figure 2 est une synoptique des modules de traitement du dispositif conforme à l'invention.

La figure 3 est une représentation du résultat obtenu sur un oscilloscope cathodique au moyen du dispositif conforme à l'invention.

La figure 4 est une représentation sommaire du schéma optique d'une autre forme d'exécution de l'invention.

Le premier exemple de réalisation qui va être décrit concerne un dispositif adapté pour déterminer en continu un indice de crêpage d'une feuille de papier crêpé en mouvement. Il concerne notamment un dispositif apte à être monté sur la chaine de fabrication dudit papier crêpé en sortie du yankee, juste avant le stockage sur le cylindre bobineur. Toutefois, il va de soi que l'invention ne saurait se limiter à cette forme de réalisation, et que le dispositif décrit pourrait tout aussi bien être adapté à tout type de matériau en feuille présentant des variations superficielles.

Le dispositif selon l'invention comprend un laser Hélium-Néon (1) émettant un faisceau polarisé (2) circulaire, d'une puissance de dix milliwatts. Ce laser (1) est alimenté de manière connue au moyen d'un câble relié à une alimentation classique non représentée. Afin de ne pas fausser les mesures effectuées, le faisceau laser (2) n'est pas dirigé perpendiculairement à la feuille de papier crêpé (3) en mouvement à analyser. Le faisceau (2) traverse un système optique (4) constitué par une lentille astigmate cylindrique de cent millimètres de focale, destiné à allonger la tache du faisceau laser sur la feuille (3) dans le sens parallèle aux ondulations du papier crêpé. En d'autres termes, la lentille (4) a pour but de transformer, au niveau de la feuille (3), la tache quasi-circulaire que le faisceau laser (2) donnerait seul, en une tache elliptique, dont le petit axe est inférieur au pas moyen du crêpage. Par "pas moyen du crêpage", on entend la distance moyenne séparant deux crêtes consécutives **A** et **B** des ondulations constitutives dudit crêpage. Le fait d'utiliser une ellipse (par exemple 100 × 800 micromètres pour un pas moyen de 200 micromètres) et non plus une tache circulaire permet d'éliminer l'influence des trous de petite dimension fréquents dans les papiers crêpés, qui fausseraient les mesures effectuées. En effet, dans le cas où une tache circulaire passe au travers d'un trou, l'absence de lumière rétrodiffusée perturbe la mesure.

Le faisceau laser ovalisé (5) est rétrodiffusé (6) sur la feuille (3) en mouvement, et vient traverser un autre système optique à deux lentilles (7), destiné à former une image dans le plan défini par la surface sensible du capteur de position (8), situé juste derrière ledit système optique (7). On choisit un système (7) à deux lentilles, afin de pouvoir corriger les aberrations optiques.

Le capteur de position (8) est constitué d'une cellule au silicium, du type LSD 30 D, commercialisée par la société United Detector Technology. Cette cellule comporte une surface sensible (20) reliée à deux connexions de sortie (21, 22) munies chacune d'un convertisseur courant-tension (23, 24).

Chacune de ces sorties (23, 24) délivre un signal électrique lorsqu'elle reçoit un faisceau lumineux, ce signal étant une fonction combinée de la quantité de lumière reçue et de la position du point d'impact (25) dudit faisceau par rapport aux deux extrémités (26, 27) de la cellule (20). On désigne par Y et X les valeurs des intensités respectives au niveau des deux sorties (21, 22). On considère que la longueur de la cellule (20) est normée, c'est-à-dire a une longueur égale à l'unité. Si le point d'impact (25) de faisceau laser rétrodiffusé (6) sur la dite cellule (20) est à une distance a de l'extrémité (26) de la cellule, il est donc à une distance (1-a) de l'extrémité (27), puisque la cellule a une longueur égale à l'unité. Si l'éclairement au niveau de la cellule (20) a pour valeur E, alors on peut écrire :

$$X = E \cdot a$$

$$Y = E \cdot (1-a).$$

Après le passage au sein des convertisseurs courant-tension (23, 24), les signaux de sortie (21, 22) sont transférés à un conditionneur analogique désigné par la référence générale $\underline{C}$, qui effectue la relation :

$$S = \frac{X - Y}{X + Y} = \frac{E \cdot (2a - 1)}{E} = 2a - 1$$

Ainsi, le signal de sortie $\underline{S}$ du conditionneur $\underline{C}$ est indépendant de la valeur $\underline{E}$ de l'éclairement. Il constitue de ce fait une mesure de la position de l'impact (25) du faisceau laser (5) sur la feuille (3) en mouvement. En effet, si l'on fait varier la position du capteur (8) par rapport à la feuille (3), ou l'inverse, le point d'impact (25) du faisceau laser (6) sur la cellule va varier, de même que la valeur $\underline{a}$.

En pratique, le conditionneur $\underline{C}$ est constitué de trois amplificateurs, à savoir un premier (10) destiné à réaliser l'opération somme X + Y, un deuxième (11) destiné à réaliser l'opération différence X − Y, et un troisième (12) amplificateur-diviseur réalisant l'opération quotient $\underline{S}$.

Le signal de sortie $\underline{S}$ du conditionneur $\underline{C}$ est ensuite filtré au moyen d'un filtre passe-haut (13) du premier ordre. Afin de ne pas entacher d'erreur les mesures effectuées, il est nécessaire d'éliminer les ondulations parasites, dont les fréquences sont généralement beaucoup plus basses. Il est à noter que ce filtre (13) est adaptable en fonction des vitesses de défilement de la feuille (3) et du pas moyen des ondulations (A, B) de surface rencontrées.

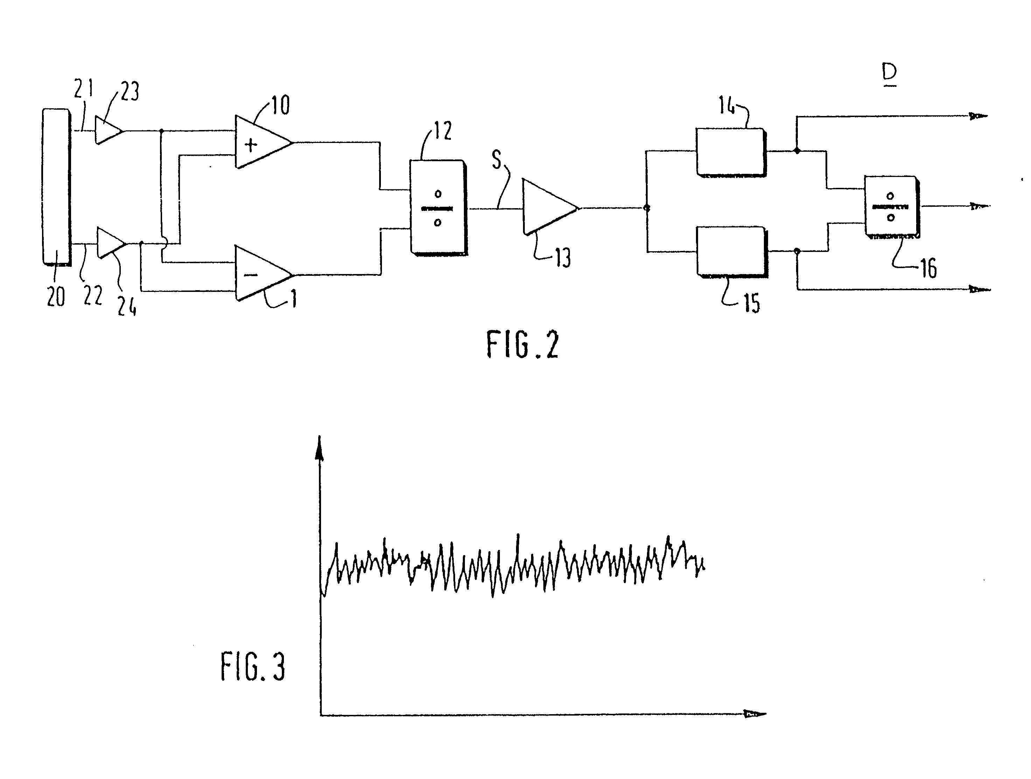

Le signal issu du filtre passe-haut (13), et dont la figure 3 montre l'allure sur un oscilloscope, est alors traité par un circuit de calcul de valeur RMS, (ou valeur efficace), monté en parallèle avec un circuit de calcul de l'amplitude crête à crête de la modulation, désigné par la référence générale $\underline{D}$.

Le module RMS (14) est un module de calcul analogique comprenant de manière classique un filtre passe-bas intégré. Le circuit crête à crête (15) est composé de deux modules en parallèle, l'un calculant la valeur minimum d'une modulation, l'autre calculant la valeur maximum de ladite modulation, un troisième module effectuant la différence de ces deux valeurs.

Afin d'obtenir un signal représentatif du facteur de forme de la modulation analysée, un module diviseur (16) détermine le quotient du signal RMS sur le signal crête à crête.

Enfin, un autre module électronique (non représenté) mesure la période des ondulations, ce qui permet d'en déduire le pas moyen de crêpage connaissant la vitesse de défilement de la feuille à analyser.

Le signal restitué sur un enregistreur graphique, permet de suivre en temps réel l'évolution du crêpage sur une machine. Notamment, l'évolution de l'usure des racles est particulièrement décelable. En effet, on assiste à l'évolution de la hauteur de crêpage avec l'usure des racles.

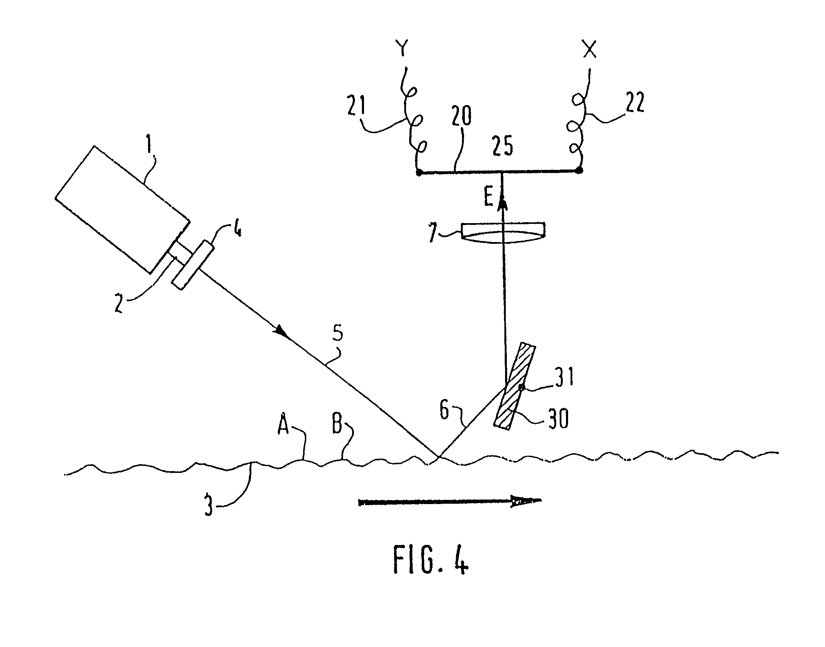

Dans une seconde forme d'exécution avantageuse montrée à la figure 4, le faisceau rétrodiffusé (6) est projeté sur un miroir plan (30) monté pivotant autour d'un axe (31). Ce miroir (30) est asservi en position par un moteur non représenté. Cette disposition permet de maintenir la position moyenne du point d'impact (25) du faisceau rétrodiffusé (6) en position fixe sur la cellule (20), en traitant le signal électrique de sortie de l'amplificateur diviseur (12) que l'on filtre avant de l'envoyer sur ledit moteur d'asservissement.

Dans la forme de réalisation utilisée en pratique, tous les éléments constitutifs du dispositif conforme à l'invention sont montés sur une même plaque, à l'extrémité de laquelle est fixé un patin légèrement cintré, et destiné à venir en contact de la feuille à analyser en mouvement. Une fenêtre est ménagée au centre de ce patin, afin de permettre l'acheminement du rayon laser (5) au niveau de la feuille, ainsi que celui des rayons rétrodiffusés (6) du dit faisceau laser par la feuille au niveau du miroir (30).

De la présente invention ressort une pluralité d'avantages, qu'aucun dispositif ne permettait d'obtenir jusqu'alors. On peut citer :

— la possibilité d'un contrôle en continu et permanent de l'état de surface d'une feuille ;

— la possibilité d'assurer la surveillance du bon fonctionnement de la machine de fabrication ;

— dans l'exemple de réalisation, la possibilité de déterminer les variations d'épaisseur de la feuille, par le biais de la mesure de la hauteur de crêpage ;

— le contrôle de l'usure de la racle ;

— un gain de temps, du fait de la facilité accrue des réglages à opérer afin d'obtenir un produit de caractéristiques déterminées.

La présente invention est susceptible de présenter un certain nombre d'applications, notamment l'étude des papiers crêpés et microcrêpés. De même, elle est susceptible d'être utilisée pour l'analyse de l'état de tout type de surface en défilement, par exemple des tissus, films, etc.


## Revendications

1. Dispositif pour déterminer en continu un indice d'état de surface d'une feuille en mouvement (3), crêpée sous forme d'ondulations (A, B), du type comprenant :

• une source laser (1) émettant un faisceau dirigé sur la surface de la feuille crêpée (3) en mouvement ;

• un premier système optique (4), destiné à concentrer le faisceau émis (5) sur la source (1) et à former une tache lumineuse sur la surface de la feuille (3) à analyser ;

• une cellule opto-électronique (8) destinée à recevoir le faisceau rétrodiffusé (6) par la feuille (3) en mouvement, disposé du même côté de la feuille (3) que le premier système optique (4), et dont la surface sensible (20) reçoit au moins une partie de la lumière rétrodiffusée (6), concentrée par un second système optique convergent (7), ladite cellule opto-électronique (8, 20) délivrant au moins une formation électrique en fonction de la position du point d'impact (25) du faisceau rétrodiffusé (6) délivré par le système optique convergent (7) sur ladite surface sensible (20) ;

• et un système de traitement du faisceau rétrodiffusé (6) comprenant un moyen pour déterminer un indice d'état de surface de la feuille de papier (3) à partir desdites informations électriques, caractérisé en ce que le premier système optique est un système astigmate (4) destiné, à donner, au niveau de la feuille (33), une forme elliptique à la tache lumineuse (3), le grand axe de cette ellipse étant disposé parallèlement aux ondulations (A, B) de la feuille crêpée (3) à analyser, et le petit axe de cette ellipse étant inférieur au pas moyen des ondulations (A, B).

2. Dispositif selon la revendication 1, caractérisé en ce qu'il comprend également un moyen (30, 31) pour maintenir en un point fixe la position moyenne du point d'impact du faisceau rétrodiffusé (6) formé sur la cellule opto-électronique (8).

3. Dispositif selon la revendication 2, caractérisé en ce que ledit moyen est un miroir (30), mobile autour d'un axe (31) et asservi en position, ledit miroir (30) étant situé sur le trajet optique du faisceau laser rétrodiffusé (6) entre la feuille à analyser en mouvement (3) et le second système optique (7).

4. Dispositif selon l'une des revendications 1 à 3, caractérisé en ce que le signal fonction des variations de position est filtré en passe-haut (13) afin d'éliminer les basses fréquences parasites.

5. Dispositif selon l'une des revendications 1 à 4, caractérisé en ce que le signal filtré en sortie du filtre passe-haut (13) est traité par au moins un module $\underline{D}$ permettant de déterminer au moins l'une des valeurs suivantes :

— crête à crête (15) ;

— valeur efficace RMS (14).

6. Dispositif selon la revendication 5, caractérisé en ce que le module $\underline{D}$ présente également un module diviseur (16) destiné à évaluer le facteur de forme du signal filtré à partir des indications données par le module RMS (14) et le module crête à crête (15).

7. Dispositif selon l'une des revendications 5 et 6, caractérisé en ce qu'il comprend également un moyen destiné à évaluer le pas moyen de crêpage.


## Claims

1. A device for on line determination of the surface state index for a moving sheet (3), creped in the shape of waves (A, B), of the type comprising :

— a laser source (1) emitting a beam directed onto the surface of the moving creped sheet (3) ;

— a first optical system (4) intended to concentrate the beam (5) emitted by the source (1) and to form a luminous spot on the surface of the sheet (3) to be analyzed ;

— an optoelectronic cell (8) intended to receive the beam (5) back-scattered by the moving sheet (3), arranged on the same side of the sheet (3) as the first optical system (4), the sensitive surface (20) of said cell receiving at least a part of the back-scattered light (6) concentrated by a second convergent optical system (7), said optoelectronic cell (8, 20) delivering at least one electrical signal depending on the position of the point of impact (25) of the back-scattered light beam (6) delivered by the convergent optical system (7) onto the said sensitive surface (20) ;

— a system for processing the back-scattered beam (6) comprising a means for determining a surface state index for the sheet of paper (3) from said electrical signals ;

characterized by the fact that the first optical system is an astigmatic system (4), intended to give to the luminous spot an elliptical shape at the point where it meets the sheet (3), the major axis of this ellipse being arranged parallel to the undulations (A, B) on the creped sheet (3) to be analyzed, and the minor axis of this ellipse having a length less than the average pitch of the undulations (A, B).

2. Device according to claim 1, characterized in the fact that it also comprises a means (30, 31) of maintaining at a fixed point the average position of the point of impact of the back-scattered beam (6) formed on the optoelectronic cell (8).

3. Device according to claim 2, wherein said means is a mirror (30), movable about an axis (31) and automatically controlled in position, said mirror (30) being located in the optical path of the back-scattered laser beam (6) between the moving sheet to be analyzed (3) and the second optical system (7).

4. Device according to any of claims 1 to 3, wherein the signal depending on the variations in position is passed through a high-pass filter (13) in order to remove the stray low frequencies.

5. Device according to any of claims 1 to 4, wherein the filtered signal at the output of the high-pass filter (13) is processed by at least one module D enabling at least one of the following values to be determined :
— peak-to-peak (15) ;
— effective RMS value (14).

6. Device according to claim 5, wherein the module D also has a divider module (16) for evaluating the shape factor of the filtered signal from the indications given by the RMS module (14) and the peak-to-peak module (15).

7. Device according to any of claims 5 and 6, which also comprises a means intended to evaluate the average pitch of creping.

## Patentansprüche

1. Vorrichtung zur kontinuierlichen Bestimmung des Oberflächenbeschaffenheitsindex eines laufenden Blattes (3), das in Form von Wellen (A, B) gekreppt ist, die folgendes aufweist :
— eine Laser-Quelle (1), die ein auf die Oberfläche des laufenden, gekreppten Blattes (3) gerichtetes Strahlenbündel abgibt ;
— ein erstes optisches System (4) zur Konzentration des von der Quelle (1) abgegebenen Strahlenbündels (5) und zur Bildung eines Lichtflecks auf der Oberfläche des zu analysierenden Blattes (3) ;
— eine optoelektronische Zelle (8) zur Aufnahme des durch das laufende Blatt (3) rückgestreuten Strahlenbündels (6), welche auf derselben Seite des Blattes (3) angeordnet ist wie das erste optische System (4), und deren empfindliche Oberfläche (20) mindestens einen Teil des rückgestreuten, durch ein zweites sammelndes optisches System (7) konzentrierten Lichtes (6) aufnimmt, wobei die optoelektronische Zelle (8, 20) mindestens eine elektrische Information liefert in Abhängigkeit von der Lage des Auftreffpunktes (25) des aus dem optischen Sammelsystem (7) austretenden rückgestreuten Strahlenbündels (6) auf der empfindlichen Oberfläche (20) ;
— und ein System zur Verarbeitung des rückgestreuten Strahlenbündels (6) mit einem Mittel zur Bestimmung eines Oberflächenbeschaffenheitsindexes des Papierblattes (3), ausgehend von den genannten elektrischen Informationen,

dadurch gekennzeichnet, daß das erste optische System ein astigmatisches System (4) ist, das dazu bestimmt ist, in der Ebene des Blattes (3) dem Lichtfleck eine elliptische Form zu geben, deren große Achse parallel zu den Wellen (A, B) des zu analysierenden gekreppten Blattes (3) liegt und deren kleine Achse kleiner als die mittlere Länge der Wellen (A, B) ist.

2. Vorrichtung nach Anspruch 1, dadurch gekennzeichnet, daß sie auch ein Mittel (30, 31) aufweist, um die Mittellage des Auftreffpunktes des rückgestreuten Strahlenbündels (6) auf der optoelektronischen Zelle (8) an einem festen Punkt zu halten.

3. Vorrichtung nach Anspruch 2, dadurch gekennzeichnet, daß das Mittel ein Spiegel (30) ist, der um eine Achse (31) schwenkbar und in Position einstellbar ist, wobei dieser Spiegel (30) sich im Lichtweg des rückgestreuten Laser-Strahlenbündels (6) zwischen dem zu analysierenden laufenden Blatt (3) und dem zweiten optischen System (7) befindet.

4. Vorrichtung nach einem der Ansprüche 1 bis 3, dadurch gekennzeichnet, daß das von Positionsveränderungen abhängige Signal einen Hochpaß-Filter (13) durchläuft, um niedrige Störfrequenzen zu eliminieren.

5. Vorrichtung nach einem der Ansprüche 1 bis 4, dadurch gekennzeichnet, daß das gefilterte Signal am Ausgang des Hochpaß-Filters (13) durch mindestens einen Modul D behandelt wird, der es ermöglicht, mindestens einen der folgenden Werte zu bestimmen
— Spitze-Spitze (15) ;
— Effektivwert RMS (14).

6. Vorrichtung nach Anspruch 5, dadurch gekennzeichnet, daß der Modul D auch einen Teilermodul (16) aufweist zum Bewerten des Formfaktors des gefilterten Signals, ausgehend von den durch den Modul RMS (14) und den Modul Spitze-Spitze (15) gelieferten Angaben.

7. Vorrichtung nach den Ansprüchen 5 und 6, dadurch gekennzeichnet, daß sie auch ein Mittel aufweist, um die mittlere Länge der Kreppung zu bewerten.

FIG.1

EP 0 333 812 B1

EP 0 333 812 B1

D

21 23 10
20 22 24 1 12 S 13 14 15 16

FIG.2

FIG.3

FIG. 4

EP 0 333 812 B1